# FASCICULE DE BREVET EUROPEEN

(11) **EP 0 474 546 B1**
(45) Date de publication et mention de la délivrance du brevet: **03.08.1994**
(21) Numéro de dépôt: 91402344.5
(22) Date de dépôt: 02.09.1991
(51) Int. Cl.: F16D 23/14, F16D 23/12

(54) **Butée d'embrayage**
Kupplungsausrücklager
Clutch release bearing

(30) Priorité: 07.09.1990 FR 9011137
(43) Date de publication de la demande: 11.03.1992
(73) Titulaire: SKF FRANCE, F-92142 Clamart Cédex (FR)
(72) Inventeur: Caron, Fabrice, F-78210 Montigny-le-Bretonneux (FR)
(74) Mandataire: Casalonga, Axel

(56) Documents cités:
- DE-A- 1 425 361
- DE-A- 3 240 076
- FR-A- 2 381 939
- US-A- 2 840 208
- US-A- 3 250 356

## Description

La présente invention est relative à une butée d'embrayage du type comprenant un palier à roulement dont l'une des bagues entre en contact permanent avec un organe d'embrayage et en particulier avec le diaphragme de l'embrayage. La butée d'embrayage comprend également une douille de guidage munie d'une collerette radiale par rapport à laquelle le palier peut se déplacer radialement afin d'assurer l'auto-alignement de la butée d'embrayage lors des opérations de débrayage. La douille de guidage peut coulisser axialement par rapport à un tube-guide sous l'action d'un organe de commande également appelé fourchette de débrayage, présentant des doigts d'extrémité capables de venir en contact avec une surface d'une plaque d'appui métallique solidaire de la collerette radiale de la douille de guidage.

Lors du fonctionnement de ce type de butée d'embrayage, dit à contact constant, c'est-à-dire dont la bague tournante est en contact permanent avec le diaphragme de l'embrayage, le contact se fait avec une légère précharge à l'état embrayé et avec une charge plus importante de débrayage pendant l'opération de débrayage.

On rencontre dans ces butées d'embrayage un certain nombre de difficultés à l'endroit du contact entre les doigts d'extrémité de l'organe de commande et la douille de guidage de la butée.

On constate tout d'abord des phénomènes d'usure à l'endroit de ce contact en raison de la cinématique du mouvement relatif entre l'organe de commande et la butée d'embrayage. En effet la butée coulisse axialement sur le tube-guide alors que l'organe de commande pivote par rapport à un point ou un axe fixe qui se trouve à une certaine distance de l'axe de coulissement de la butée. Il en résulte un glissement relatif entre les surfaces de contact respectives de l'organe de commande et de la butée d'embrayage. Les doigts d'extrémité de l'organe de commande sont réalisés généralement en acier et se terminent par une forme convexe arrondie. Ils viennent porter par cette extrémité convexe sur une surface d'appui de la butée constituée ou renforcée par une plaque d'appui métallique généralement réalisée en acier traité de façon à présenter une grande dureté.

Le glissement relatif des surfaces de contact entre l'organe de commande et cette plaque d'appui métallique se fait donc dans de mauvaises conditions, c'est-à-dire acier contre acier et avec une forte concentration des contraintes au point de contact. Il en résulte une usure relativement rapide des doigts d'extrémité de l'organe de commande et de la plaque d'appui métallique.

Indépendamment de ces problèmes d'usure, on constate l'apparition et la transmission de vibrations et de bruits qui sont favorisés par le contact acier/acier entre l'organe de commande et la butée. Ces vibrations se trouvent alors transmises depuis l'ensemble du groupe motopropulseur comportant la boîte de vitesses et sa butée d'embrayage jusqu'à l'habitacle du véhicule.

Par ailleurs un certain jeu subsiste fréquemment entre les surfaces de guidage latérales de la butée et les doigts d'extrémité de l'organe de commande. Ce jeu favorise également l'apparition de vibrations engendrant des bruits prenant naissance au voisinage de l'organe de commande en particulier lorsque la butée est peu chargée.

Le brevet français n° 2 536 482 (SKF) décrit une butée d'embrayage présentant des moyens susceptibles de filtrer ou d'amortir les bruits et les vibrations. Ces moyens sont constitués par quatre blocs en caoutchouc ou en élastomère surmoulés ou collés sur la plaque d'appui métallique de la butée d'embrayage et interposés entre cette plaque d'appui métallique et la collerette radiale de la douille de guidage. Lors de l'opération d'embrayage, les blocs en caoutchouc se trouvent écrasés, la plaque d'appui métallique venant alors en contact direct avec la collerette radiale de la douille de guidage. Ces moyens sont relativement complexes et donc coûteux à réaliser. De plus ils ne résolvent nullement les problèmes d'usure entre les doigts d'extrémité de l'organe de commande et la plaque métallique d'appui de la butée.

La présente invention a pour objet une butée d'embrayage du type précédemment mentionné, permettant de limiter au maximum l'usure des surfaces de la plaque d'appui métallique et des doigts d'extrémité de l'organe de commande tout en éliminant la transmission des vibrations et ce, de façon extrêmement simple et économique.

La butée d'embrayage selon l'invention comprend un palier à roulement muni de bagues extérieure et intérieure, l'une desdites bagues étant adaptée pour entrer en contact permanent avec un organe d'embrayage. Une douille de guidage comporte une collerette radiale par rapport à laquelle le palier à roulement peut se déplacer radialement, la douille de guidage pouvant coulisser axialement par rapport à un tube-guide sous l'action d'un organe de commande présentant des doigts d'extrémité venant en contact avec une surface d'une plaque métallique solidaire de la collerette radiale de la douille de guidage. Selon l'invention, la butée d'embrayage comprend en outre des sabots de contact capables de recevoir les doigts d'extrémité de l'organe de commande et interposés entre lesdits doigts et la surface de contact de la collerette radiale.

Les sabots de contact sont de préférence réalisés en un matériau présentant un faible coefficient de frottement.

Les doigts d'extrémité de l'organe de commande sont de préférence convexes, les sabots comportant alors une surface de réception concave correspondante, opposée à une surface plane qui coopère avec la surface de contact également plane de la collerette radiale de la douille de guidageou de la plaque métallique d'appui.

Les sabots peuvent avantageusement présenter un rebord axial pour le guidage des doigts d'extrémité de l'organe de commande.

Suivant l'invention, la douille de guidage est réalisée en une matière synthétique moulée et les sabots sont venus de moulage avec la douille. En sortie de moule, les sabots de contact sont reliés à la douille par des plots de liaison présentant une section affaiblie de façon à être rompus sous l'action de l'effort exercé par l'organe de commande sur les sabots de contact, au moment de la première manoeuvre de la butée d'embrayage.

Les sabots de contact sont avantageusement solidaires d'une couronne annulaire également venue de moulage avec la douille de guidage et reliée à celle-ci par des plots de liaison.

L'ensemble constitué par les sabots de contact et éventuellement la couronne annulaire, est, en sortie de moulage, simplement en contact avec la plaque d'appui métallique de la butée d'embrayage, la surface plane et lisse de la plaque d'appui n'offrant aucune adhérence ni aucun accrochage à la matière synthétique moulée.

Au moment de la première manoeuvre de la butée d'embrayage, lors du montage sur le véhicule, les doigts d'extrémité de l'organe de commande viennent s'engager dans les surfaces de réception concaves des sabots. La cinématique des doigts d'extrémité et de la butée d'embrayage donne naissance à des efforts transversaux qui provoquent le cisaillement des zones de section affaiblies des plots de liaison reliant à l'origine les sabots de contact avec la douille de guidage éventuellement par l'intermédiaire de la couronne annulaire. L'ensemble constitué par les sabots de contact et éventuellement la couronne annulaire reste en contact avec la plaque d'appui de la butée mais peut désormais se déplacer plan sur plan contre la plaque d'appui. Les sabots de contact guidés par les doigts d'extrémité de l'organe de commande peuvent effectuer par rapport à la plaque d'appui de la butée d'embrayage, les mouvements naturels de glissement relatifs que leur impriment les doigts d'extrémité des organes de commande lors de la manoeuvre de la butée d'embrayage.

La butée d'embrayage de l'invention fonctionnant en contact constant avec le diaphragme de l'embrayage, l'ensemble constitué par les sabots de contact et éventuellement la couronne annulaire ne peut pas s'échapper et est maintenu constamment appuyé contre la plaque d'appui par les doigts d'extrémité de l'organe de commande. Les pressions de contact entre les doigts d'extrémité et les sabots de contact ainsi qu'entre les sabots de contact et la plaque d'appui sont réduits, étant donné les dimensions relativement importantes des surfaces de contact.

Pour la réalisation de la douille de guidage et des sabots de contact, on choisit de préférence un matériau moulable ayant un faible coefficient de frottement et de bonnes caractéristiques mécaniques, par exemple une matière plastique chargée en fibres de verre et en bisulfure de molybdène.

Dans un mode de réalisation avantageux de l'invention, la douille de guidage présente des oreilles de guidage pour l'organe de commande, munies de pattes élastiques venant en contact avec les doigts d'extrémité et exerçant une précontrainte latérale sur ceux-ci. Les oscillations causées par le jeu existant entre l'organe de commande et les oreilles de la douille de guidage se trouvent ainsi éliminées ou largement réduites.

L'invention sera mieux comprise à l'étude d'un mode de réalisation décrit à titre d'exemple nullement limitatif et illustré par les dessins annexés sur lesquels:
la figure 1 est une vue extérieure de côté d'une butée d'embrayage selon l'invention avant son montage sur un véhicule, lorsque les sabots de contact sont encore reliés à la douille de guidage;
la figure 2 est une vue partielle en coupe selon II-II de la figure 1 sur laquelle on a également représenté en coupe un doigt d'extrémité de l'organe de commande;
la figure 3 est une vue partielle en coupe selon III-III de la figure 1, un arrachement étant représenté en coupe afin de montrer le contact entre les sabots de contact et la plaque d'appui, l'ensemble étant représenté avant le montage sur le véhicule et illustrant également la position des différents éléments en position embrayée;
la figure 4 est une vue analogue à la figure 3 montrant la position des différents éléments lors d'une opération de débrayage; et
la figure 5 est une vue analogue à celle de la figure 4 montrant la position des différents éléments en position embrayée après une certaine usure de l'embrayage.

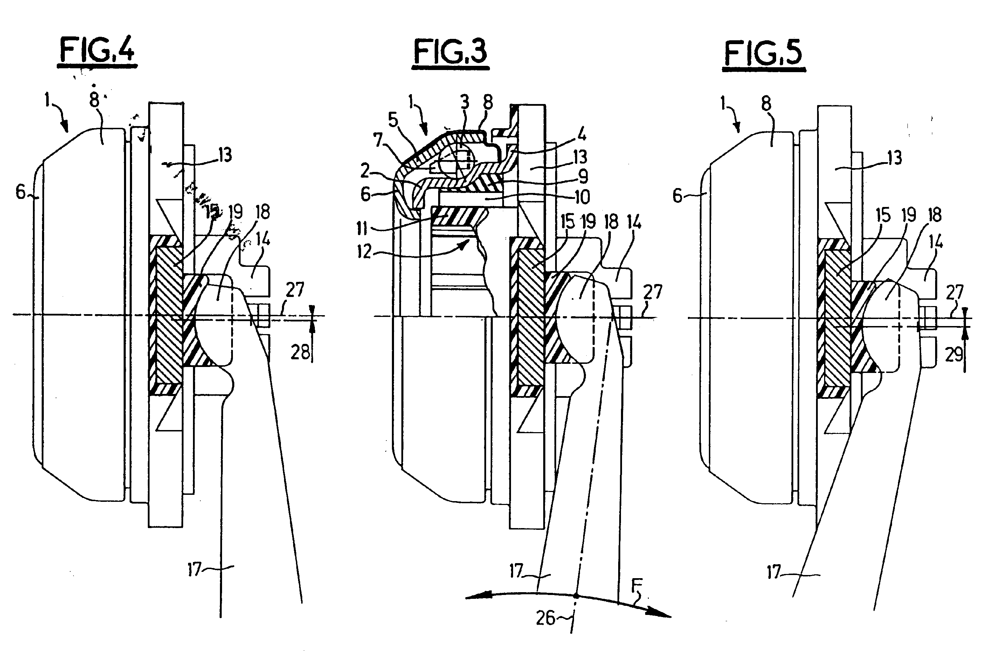

Telle qu'elle est représentée sur les figures et en particulier sur la figures 3, la butée d'embrayage conforme à l'invention comprend un palier à roulement référencé 1 dans son ensemble muni d'une bague intérieure de roulement 2 à paroi mince réalisée par emboutissage d'un tube ou d'une tôle présentant un chemin de roulement pour une rangée de billes 3. La bague intérieure 2 présente une collerette radiale 4 dirigée vers l'extérieur. Le roulement 1 se complète par une bague extérieure 5 également à paroi mince réalisée par emboutissage d'une tôle ou d'un tube et qui comporte une portion torique 6 qui est maintenue en contact constant avec la surface du diaphragme d'un embrayage non représenté sur les figures. Les billes 3 sont maintenues par une cage 7 le roulement 1 étant protégé par un flasque 8.

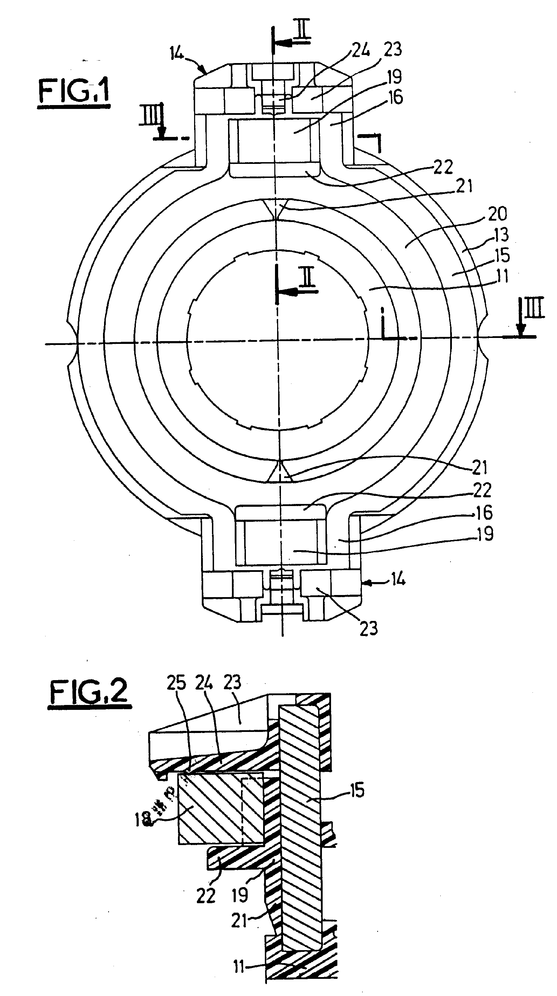

Un manchon en matière élastique souple 9 par exemple en élastomère ou en caoutchouc naturel est disposé à l'intérieur de la bague intérieure 2 et comporte une pluralité de nervures 10 parallèles à l'axe de la butée dirigées vers l'intérieur. Le bord libre des nervures 10 entre en contact avec une portion cylindrique 11 d'une douille de guidage rigide référencée 12 dans son ensemble et réalisée en matière synthétique moulé rigide. L'alésage de la portion cylindrique 11 est en contact de glissement avec la surface externe d'un tube-guide non représenté sur la figure 3 assurant le guidage du déplacement longitudinal de la butée lors de chaque opération de débrayage. La douille de guidage 12 comporte une collerette radiale 13. La collerette radiale 13 comporte deux extensions radiales 14 diamètralement opposées visibles également sur la figure 1.

La branche radiale 4 en forme de collerette annulaire de la bague intérieure 2 est en contact de frottement avec la collerette radiale 13 de la douille de guidage 12. De cette manière, lors d'une opération de débrayage, le palier à roulement 1 peut se déplacer par rapport à la douille de guidage 12 grâce à la déformation des nervures 10 du manchon élastique 9. Ce déplacement se fait dans un plan radial grâce au contact de frottement entre la branche radiale 4 et la face correspondante plane de la collerette radiale 13.

Une plaque d'appui métallique 15 recouvre la collerette radiale 13 à l'opposé du palier à roulement 1 et présente un contour extérieur épousant sensiblement la forme de la collerette radiale 13. En particulier la plaque d'appui 15 comporte également, comme on peut le voir sur la figure 1, deux prolongations radiales 16 qui viennent en face des prolongations radiales 14 de la collerette 13. La douille de guidage 12 est réalisée par surmoulage de matière synthétique autour de la plaque d'appui métallique 15. Le matériau utilisé pour la douille de guidage 12 présente de préférence un faible coefficient de frottement et de bonnes caractéristiques mécaniques. On pourra utiliser par exemple une matière plastique chargée avec des fibres de verre et du bisulfure de molybdène.

L'organe de commande de la butée d'embrayage affecte la forme générale d'une fourchette à deux branches dont l'une est visible sur les figures 3 à 5 et référencée 17. A l'extrémité de chacune des branches 17 se trouve un doigt d'extrémité 18 présentent une surface convexe. Deux sabots de contact 19 diamètralement opposés comme on peut le voir sur la figure 1, sont interposés entre les doigts d'extrémité 18 et les prolongations radiales 16 de la plaque d'appui 15. La surface des sabots de contact 19 se trouvant en regard des doigts d'extrémité 18 présente une forme de réception concave correspondant au profil convexe des doigts d'extrémité 18 comme on peut le voir sur les figures 3 à 5. A l'opposé, la surface des sabots de contact 19 est plane de façon à pouvoir glisser sur la surface plane de la plaque d'appui 15 métallique.

Les deux sabots 19 sont solidaires d'une couronne annulaire 20 (figure 1) qui est reliée à la douille de guidage 11 par deux plots de liaison 21 présentant une section affaiblie.

Dans ces conditions, les sabots de contact 19 et la couronne annulaire 20 sont venus de moulage avec la douille de guidage 12 munie de sa portion cylindrique 11 et sont donc constitués comme cette dernière d'un matériau synthétique à faible coefficient de frottement. Les sections affaiblies des plots de liaison 21 permettent, comme on le verra plus loin, la désolidarisation de l'ensemble formé par les sabots de contact 19 et la couronne 20 par rapport à la douille de guidage 12 lors de la première manoeuvre de la butée après son montage sur le véhicule. Sur les figures 1 et 2 la butée d'embrayage est représentée avant son montage sur le véhicule, les plots de liaison 21 n'ayant pas encore été rompus. On comprendra que, dans un autre mode de réalisation, la couronne 20 pourrait être supprimée, les sabots de contact 19 étant alors reliés directement à la douille de guidage 12 par des plots de liaison à section affaiblie.

Chaque sabot de contact 19 présente en outre, dans l'exemple illustré, un rebord de guidage 22 (figure 1 et 2) dirigé axialement par rapport à l'axe de la butée d'embrayage et destiné à coopérer avec le doigt d'extrémité 18 correspondant pour guider celui-ci lors des mouvements de l'organe de commande 17.

De plus, dans l'exemple illustré, les deux prolongations radiales 14 de la collerette 13 de la douille de guidage 12 présentent des oreilles de guidage 23 s'étendant également axialement dans la même direction que les rebords de guidage 22 et présentant une patte élastique 24 munie d'un bossage de contact 25 qui peut entrer en contact avec le doigt d'extrémité 18 comme on peut le voir sur la figure 2 afin d'exercer sur celui-ci une précontrainte latérale destinée à éliminer ou réduire les oscillations latérales de l'organe de commande 17 en supprimant le jeu qui existe habituellement entre le doigt d'extrémité 18 de l'organe de commande et les oreilles 23 de la douille de guidage.

Le fonctionnement de la butée d'embrayage de l'invention est le suivant si on se réfère aux figures 3 à 5.

Avant le montage sur le véhicule, la butée d'embrayage présente la structure illustrée sur les figures 1 et 2, l'ensemble formé par les sabots de contact 19 et la couronne annulaire 20 étant solidaire, par les plots de liaison 21, de la partie cylindrique 11 de la douille de guidage 12. La figure 3 illustre la butée d'embrayage après son montage sur le véhicule, les doigts d'extrémité 18 des branches 17 de l'organe de commande étant venus se loger dans les surfaces de réception concaves des sabots de contact 19. Comme on peut le voir sur la figure 3, les branches 17, de l'organe de commande peuvent pivoter selon la flèche F autour d'un point de pivotement placé à l'extrémité de l'axe 26 et à une certaine distance de l'axe 27 par rapport auquel la butée d'embrayage dans son ensemble peut se déplacer longitudinalement et autour duquel tourne la bague extérieure 6 du palier à roulement 1. On comprend qu'en raison de ces mouvements combinés, les sabots de contact doivent pouvoir glisser sur la surface de la plaque d'appui 15.

Lors de la première manoeuvre de débrayage illustrée sur la figure 4, les branches 17 de l'organe de manoeuvre pivotent en déplaçant la butée d'embrayage vers la gauche sur la figure par rapport à la position illustrée sur la figure 3. Il en résulte des efforts transversaux qui provoquent le cisaillement des zones de section affaiblies des plots de liaison 21, les sabots de contact 19 glissant sur la plaque d'appui 15 selon un déplacement vers le bas référencé 28.

Pendant ces mouvements, les deux extrémités 18 sont convenablement guidées et centrées latéralement par les rebords de guidage 22 et maintenues par les pattes élastiques 24 (figure 2). En position embrayée, les différents éléments reprennent leur position initiale telle qu'illustrée sur la figure 3, la bague extérieure tournante 6 restant toujours en contact avec le diaphragme (non illustré sur les figures) grâce à la précharge exercée par l'intermédiaire de l'organe de manoeuvre.

La position des différents éléments à l'état embrayé varie dans le temps avec l'usure des disques et garnitures de l'embrayage et évolue avec une position telle qu'illustrée sur la figure 5, les branches 17 de l'organe de manoeuvre pivotant peu à peu vers l'arrière (à droite sur la figure) et les sabots de contact 19 se décalant graduellement d'une distance 29 par rapport à l'axe 27.

Grâce à la structure de la butée d'embrayage de la présente invention, il est possible de limiter considérablement l'usure des pièces en contact tout en réduisant les efforts de manoeuvre grâce au fait que les pressions de contact se trouvent réduites par l'interposition des sabots de contact 19. De plus les vibrations se trouvent amorties, les bruits étant ainsi filtrés ou éliminés grâce à l'existence des sabots de contact en matière plastique. Enfin les coûts de fabrication et d'assemblage sont considérablement réduits grâce à l'utilisation d'un moule unique pour la fabrication de la douille de guidage 12 et des sabots de contact 19. L'assemblage est également simplifié puisqu'aucune manipulation supplémentaire n'est nécessaire grâce à l'existence des plots de liaison 21 qui se trouvent rompus automatiquement dès la première mise en service.

## Revendications

1. Butée d'embrayage du type comprenant un palier à roulement (1) muni de bagues extérieure et intérieure, l'une des bagues (6) étant adaptée pour entrer en contact permanent avec un organe d'embrayage ; une douille de guidage (12) réalisée en matière synthétique moulée comportant une collerette radiale (13) par rapport à laquelle le palier à roulement (1) peut se déplacer radialement, la douille de guidage pouvant coulisser axialement par rapport à un tube-guide sous l'action d'un organe de commande (17) présentant des doigts d'extrémité (18) venant en contact avec une surface d'une plaque d'appui métallique (15) solidaire de la collerette radiale (13) de la douille de guidage, caractérisée par le fait qu'elle comprend en outre des sabots de contact (19) capables de recevoir les doigts d'extrémité (18) de l'organe de commande et interposés entre lesdits doigts et la surface de la plaque d'appui métallique de la collerette radiale, les sabots de contact (19) étant venus de moulage avec la douille de guidage (12) et reliés à la douille de guidage par des plots de liaison (21) présentant une section affaiblie de façon à pouvoir être rompus sous l'action d'efforts exercés par l'organe de commande (17) sur les sabots de contact (19) au moment de la première manoeuvre de la butée d'embrayage.

2. Butée d'embrayage selon la revendication 1, caractérisée par le fait que les sabots de contact sont solidaires d'une couronne annulaire (20).

3. Butée d'embrayage selon les revendications 1 ou 2, caractérisée par le fait que les sabots de contact (19) sont réalisés en un matériau présentant un faible coefficient de frottement.

4. Butée d'embrayage selon l'une quelconque des revendications précédentes, caractérisée par le fait que les sabots de contact (19) comportent une surface concave de réception des doigts d'extrémité de l'organe de commande, opposée à une surface plane coopérant avec la surface de la plaque d'appui métallique.

5. Butée d'embrayage selon l'une quelconque des revendications précédentes, caractérisée par le fait que les sabots de contact (19) présentent un rebord axial de guidage (22) pour les doigts d'extrémité (18).

6. Butée d'embrayage selon l'une quelconque des revendications précédentes, caractérisée par le fait que la collerette radiale (13) de la douille de guidage (12) présente des oreilles de guidage (23) pour l'organe de commande, munies de pattes élastiques (24) venant en contact avec les doigts d'extrémité (18) et exerçant une précontrainte latérale sur ceux-ci.

## Patentansprüche

1. Kupplungsausrücker von der Bauart, die ein Wälzlager (1) mit einem Außenring und einem Innenring aufweist, wobei einer der Ringe (6) dazu eingerichtet ist, ständig mit einem Bauteil der Kupplung in Berührung zu stehen; mit einer aus gespritztem Kunststoff hergestellten Führungsbüchse (12), die mit einem radialen Flansch (13) versehen ist, gegenüber dem sich das Wälzlager (1) radial verschieben kann, wobei die Führungsbüchse gegenüber einem Führungsrohr unter der Wirkung eines Betätigungsgliedes (17) axial verschoben werden kann, das fingerförmige Enden (18) aufweist, die mit einer Fläche einer mit dem radialen Flansch (13) der Führungsbüchse verbundenen metallischen Druckplatte (15) zusammenwirken, dadurch gekennzeichnet, daß diese (Führungsbüchse) außerdem Lagerpfannen (19) aufweist, die in der Lage sind, die fingerförmigen Enden (18) des Betätigungsgliedes aufzunehmen, und die sich zwischen den genannten fingerförmigen Enden und der Fläche der metallischen Druckplatte des radialen Flansches befinden, daß die Lagerpfannen (19) an die Führungsbüchse (12) angespritzt und mit der Führungsbüchse durch Verbindungsstege (21) verbunden sind, die einen geschwächten Bereich aufweisen, derart, daß diese bei der ersten Betätigung des Kupplungsausrückers durch die von dem Betätigungsglied (17) auf die Lagerpfannen (19) ausgeübte Kraftwirkung zerbrochen werden können.

2. Kupplungsausrücker nach Anspruch 1, dadurch gekennzeichnet, daß die Lagerpfannen mit einem ringförmigen Kranz (20) einstückig sind.

3. Kupplungsausrücker nach Anspruch 1 oder 2, dadurch gekennzeichnet, daß die Lagerpfannen (19) aus einem Material hergestellt sind, das einen kleinen Reibungskoeffizienten aufweist.

4. Kupplungsausrücker nach einem der vorstehenden Ansprüche, dadurch gekennzeichnet, daß die Lagerpfannen (19) für die fingerförmigen Enden des Betätigungsgliedes konkave Aufnahmeflächen aufweisen, die einer planen Fläche gegenüberliegen, welche mit der Fläche der metallischen Druckplatte zusammenwirkt.

5. Kupplungsausrücker nach einem der vorstehenden Ansprüche, dadurch gekennzeichnet, daß die Lagerpfannen (19) einen axialen Führungsrand (22) für die fingerförmigen Enden (18) aufweisen.

6. Kupplungsausrücker nach einem der vorstehenden Ansprüche, dadurch gekennzeichnet, daß der radiale Flansch (13) der Führungsbüchse (12) Führungsfortsätze (23) für das Betätigungsglied aufweist, die mit elastischen Armen (24) versehen sind, die an den fingerformigen Enden (18) anliegen und eine seitliche Vorspannung auf diese ausüben.

## Claims

1. Clutch thrust bearing of the type comprising a rolling bearing (1) equipped with an inner and an outer ring, one of the ring (6) being adapted in order to come into permanent contact with a clutch member ; a guide sleeve (12) made from a moulded synthetic material and comprising a radial flange (13) relative to which the rolling bearing (1) can be displaced radially , it being possible for the guide sleeve to slide axially with respect to a guide tube under the action of a control member (17) having end fingers (18) coming into contact with one surface of a metal support plate (15) integral with the radial flange (13) of the guide sleeve, characterised in that it furthermore comprises contact shoes (19) capable of receiving the end fingers (18) of the control member and placed in between the said fingers and the surface of the metal support plate of the radial flange, the contact shoes (19) being integrally moulded with the guide sleeve (12) and joined to the guide sleeve by linking webs (21) having a weakened cross-section so as to able to be broken under the action of forces exerted by the control member (17) on the contact shoes (19) when the clutch thrust bearing is operated for the first time.

2. Clutch thrust bearing according to Claim 1, characterised in that the contact shoes are integral with an annular collar (20).

3. Clutch thrust bearing according to Claims 1 or 2, characterised in that the contact shoes (19) are made from a material having a low coefficient of friction.

4. Clutch thrust bearing according to any one of the preceding claims, characterised in that the contact shoes (19) comprise a concave surface for receiving the end fingers of the control member, opposite a plane surface interacting with the surface of the metal support plate.

5. Clutch thrust bearing according to any one of the preceding claims, characterised in that the contact shoes (19) have an axial guide rim (22) for the end fingers (18).

6. Clutch thrust bearing according to any one of the preceding claims, characterised in that the radial flange (13) of the guide sleeve (12) has guide lugs (23) for the control member, which lugs are equipped with resilient tabs (24) coming into contact with the end fingers (18) and exerting a lateral prestress thereon.
